# EUROPEAN PATENT APPLICATION

(11) **EP 4 851 311 A1**
(43) Date of publication of application: **09.12.2026**
(21) Application number: 25779127.7
(22) Date of filing: 17.02.2025
(51) Int. Cl.: C21D 8/12, C22C 38/00, C22C 38/60, H01F 1/147

(54) **METHOD FOR MANUFACTURING HOT-ROLLED STEEL SHEET FOR NON-ORIENTED ELECTROMAGNETIC STEEL SHEET AND METHOD FOR MANUFACTURING NON-ORIENTED ELECTROMAGNETIC STEEL SHEET**

(30) Priority: 26.03.2024 JP 2024050551
(71) Applicant: JFE Steel Corporation, Tokyo 100-0011 (JP)
(72) Inventor: MARUYAMA, Shigehiro, Tokyo 100-0011 (JP); OKUBO, Tomoyuki, Tokyo 100-0011 (JP); SAITO, Hayato, Tokyo 100-0011 (JP)
(74) Representative: Hoffmann Eitle
(86) International application number: PCT/JP2025/005215
(87) International publication number: WO 2025/204271

(57) **Abstract**

Provided is a method of producing a hot-rolled steel sheet for a non-oriented electrical steel sheet having good magnetic properties. The method includes a process of continuous casting of a slab having a thickness of 30 mm or more and 180 mm or less from molten steel having a defined chemical composition, and a process of hot rolling the slab. After adding Ca to the molten steel, a time until casting is 150 s or longer. From obtaining the slab until the slab is transferred to an entry side of a hot rolling mill, a surface temperature of the slab is maintained at 850 °C or higher, and the surface temperature of the slab at the entry side of the hot rolling mill is 950 °C or higher. The hot rolling includes two or more passes, carried out under conditions that the strain rate in the first pass is 5.0/s or less, and the steel sheet is heated to 950 °C or higher by a bar heater between the first and second passes.

## Description

### TECHNICAL FIELD

The present disclosure relates to a method of producing a hot-rolled steel sheet for a non-oriented electrical steel sheet and a method of producing a non-oriented electrical steel sheet.

### BACKGROUND

Non-oriented electrical steel sheets are a material used in iron cores of motors and generators. In recent years, from the perspective of CO₂ reduction, there has been a strong demand for higher efficiency in electric equipment, and further decrease in iron loss is sought for non-oriented electrical steel sheets that are iron core material.

To decrease iron loss in non-oriented electrical steel sheets, it is effective to increase specific resistance by adding alloying elements such as Si, Al, and Mn, and to decrease sheet thickness. However, higher alloying and thinner thicknesses increase the load in cold rolling, which leads to a greater tendency to fracture during cold rolling. Thinner hot-rolled steel sheets for cold rolling can decrease the load in cold rolling, but this increases the load in hot rolling and makes shape control more difficult.

Therefore, a method of producing non-oriented electrical steel sheets using thinner steel slabs (thin slabs) than conventionally used has been proposed. In this method, a continuous casting machine called a thin slab caster is used to produce thin slabs, which are then subjected to rolling. Decreasing slab thickness decreases the load in both hot rolling and cold rolling. Further, a method using thin slabs typically eliminates slab reheating by directly connecting the continuous casting machine (thin slab caster) to the hot rolling mill, which significantly decreases energy costs.

Methods of producing non-oriented electrical steel sheets using thin slabs include, for example, the method described in Patent Literature (PTL) 1. In PTL 1, a technology is described for a steel slab that has a defined chemical composition and a thickness of 50 mm or more and 200 mm or less, which is transferred to a furnace while maintaining a surface temperature of 800 °C or higher. In the furnace, the thin slab is held under conditions of 1100 °C or higher and 1300 °C or lower for a holding time of 60 s or longer, then is subjected to a defined hot rolling to produce a hot-rolled steel sheet for a non-oriented electrical steel sheet having a thickness of 0.4 mm or more and 2.0 mm or less.

### CITATION LIST

### Patent Literature

PTL 1: WO 2023-095637 A1

### SUMMARY

### (Technical Problem)

According to the conventional technology described in PTL 1, the thin slab is subjected to hot rolling while being maintained at a high temperature, and therefore precipitates in the steel, particularly MnS, do not sufficiently precipitate or coarsen before hot rolling, resulting in fine precipitates that refine the steel microstructure and increase iron loss.

It would be helpful to suppress fine precipitation of precipitates and suppress an increase of iron loss in a process of hot rolling while maintaining a thin slab at a high temperature. Hereinafter, a thin slab refers to a slab having a thickness of 30 mm or more and 180 mm or less.

### (Solution to Problem)

As a result of intensive studies by the inventors, it was discovered that by adding Ca to molten steel and adjusting various conditions of a continuous casting process and a hot rolling process of a thin slab to appropriate ranges, fine precipitation of precipitates can be suppressed, and an increase in iron loss due to the casting of the thin slab can be suppressed.

First, experiments that led to the development of the present disclosure are described.

### [Experiment 1]

The inventors considered whether S present in the steel could be fixed as CaS, which has a high precipitation temperature, and conducted measurements and investigations on iron loss. In the measurements, a steel composition containing, in mass%, C: 0.002 %, Si: 3.00 %, Mn: 0.50 %, P: 0.01 %, S: 0.0020 %, Al: 0.50 %, N: 0.0020 %, Cu: 0.01 %, Mo: 0.010 %, Zn: 0.001 %, Ti: 0.002 %, with the balance being Fe and inevitable impurity, was used as a base, to which Ca was added in a range from 0.0001 % to 0.0030 % to produce molten steel. Then, during continuous casting, after 300 s had elapsed from the point of adding Ca to the molten steel having the base steel composition, the molten steel was poured and cast into a 60 mm thick slab, followed by holding in a tunnel furnace at 1100 °C for 8 min, and then hot rolling to produce a hot-rolled steel sheet having a thickness of 1.6 mm. At that time, a surface temperature of the slab at the entry side of the hot rolling mill (hereinafter also referred to as the entry temperature of hot rolling) was set to 980 °C. Hot rolling was carried out in five passes, with a strain rate of 3.0/s for the first pass of hot rolling. Further, the steel sheet was heated to 980 °C only between the first pass and the second pass using a bar heater. Subsequently, hot-rolled sheet annealing was carried out at 980 °C for 30 s. After that, cold rolling was carried out to produce a cold-rolled steel sheet having a thickness of 0.20 mm, and finally, final annealing was carried out under a dry atmosphere with a volume ratio of H₂:N₂ = 25:75 at 960 °C for 10 s. From the rolling direction and sheet transverse direction of the obtained steel sheet, an Epstein sample of width: 30 mm × length: 280 mm was cut out, and iron loss W_{10/400} was measured using an Epstein tester.

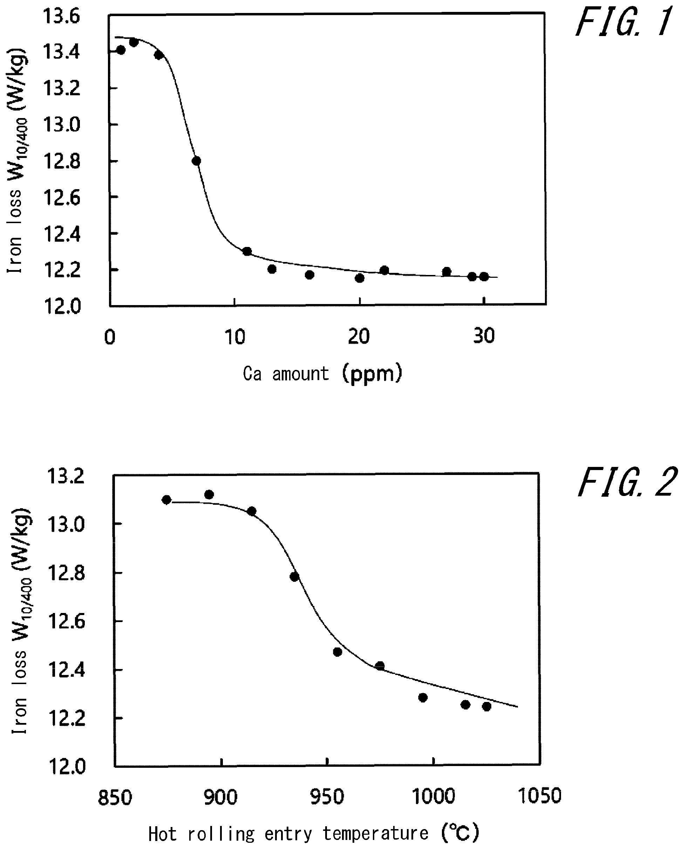

FIG. 1 illustrates a relationship between the amount of Ca added to the molten steel and iron loss W_{10/400}. From FIG. 1, it is clear that controlling the amount of Ca added to the molten steel to a range of 0.0010 % or more decreases iron loss. Further, in the range where iron loss decreased, the crystal grain size of the steel sheet observed under an optical microscope was coarsened, and when observed under SEM, the number of MnS precipitates decreased.

From the above experimental results, the inventors proposed that when the amount of Ca added is in the range of 0.0010 % or more, the influence of decreased grain growth due to precipitates is suppressed. Specifically, when the Ca content is 0.0010 % or more, CaS precipitates in the molten steel, leading to a decrease in the amount of S in the steel, which suggests that fine MnS does not precipitate in the subsequent processes.

### [Experiment 2]

The inventors considered that if CaS precipitates in the molten steel, omitting the holding process in the tunnel furnace might not affect the suppression of fine MnS precipitation. The inventors aimed to decrease iron loss by combining the omission of the holding process in the tunnel furnace with the hot rolling conditions, and investigated the necessary conditions for this. For this investigation, a steel composition containing, in mass%, C: 0.002 %, Si: 3.00 %, Mn: 0.50 %, P: 0.01 %, Al: 0.50 %, N: 0.0020 %, Cu: 0.01 %, Mo: 0.010 %, Zn: 0.001 %, Ti: 0.002 %, S: 0.0020 %, with the balance being Fe and inevitable impurity, was used as a base to which Ca: 0.0020 % was added to produce molten steel. During continuous casting, after adding Ca to the molten steel having the base steel composition and allowing 300 s to elapse, the steel was poured and cast into a slab having a thickness of 60 mm, which was transferred to the hot rolling mill without heating, and hot rolling was carried out to produce a hot-rolled steel sheet having a thickness of 1.6 mm. At that time, the entry temperature for hot rolling was varied in a range from 875 °C to 1025 °C. Hot rolling was carried out in five passes, with a strain rate of 3.0/s for the first pass of hot rolling. Further, the steel sheet was heated to 980 °C only between the first pass and the second pass using a bar heater. The obtained hot-rolled steel sheets underwent the same procedure as in Experiment 1, and iron loss was measured.

FIG. 2 illustrates the relationship between the entry temperature for hot rolling and iron loss W_{10/400}. From FIG. 2, it can be seen that when the entry temperature for hot rolling was below 950 °C, iron loss increased. The inventors proposed that the recovery of dislocations introduced during rolling is delayed at lower temperatures, causing fine precipitates with significant grain growth suppression effects, such as TiN and TiC, to precipitate on dislocations. Further, this experiment revealed that even when the holding in the tunnel furnace is omitted, if the hot rolling conditions are appropriately controlled, high-quality non-oriented electrical steel sheets having excellent magnetic properties are obtainable.

### [Experiment 3]

Next, the inventors investigated the conditions for adding Ca to the molten steel. For this investigation, a steel composition containing, in mass%, C: 0.002 %, Si: 3.00 %, Mn: 0.50 %, P: 0.01 %, Al: 0.50 %, N: 0.0020 %, Cu: 0.01 %, Mo: 0.010 %, Zn: 0.001 %, Ti: 0.002 %, S: 0.0020 %, with the balance being Fe and inevitable impurity, was used as a base to which Ca: 0.0020 % was added to produce molten steel, which was then cast into a slab having a thickness of 60 mm. During continuous casting, the time from adding Ca to the molten steel to pouring was varied between 10 s and 500 s. The cast thin slab was transferred to the hot rolling mill without heating, and hot rolling was carried out to produce a hot-rolled steel sheet having a thickness of 1.6 mm. At this time, the entry temperature for hot rolling was set to 980 °C. Hot rolling was carried out in five passes, with a strain rate of 3.0/s for the first pass of hot rolling. Further, the steel sheet was heated to 980 °C only between the first pass and the second pass using a bar heater. The obtained hot-rolled steel sheets underwent the same procedure as in Experiment 1, and iron loss was measured.

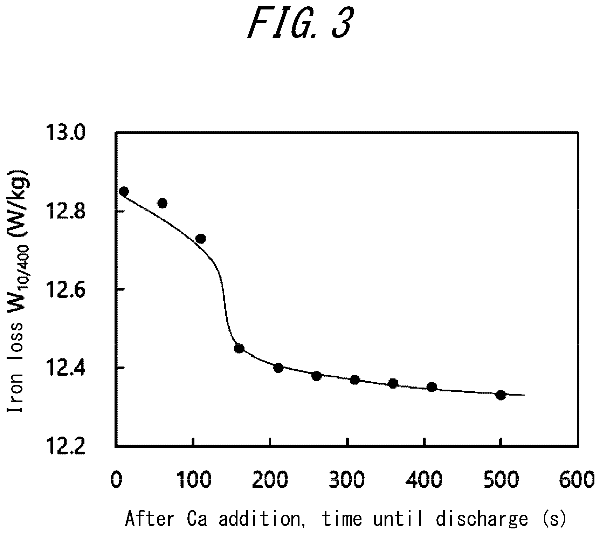

FIG. 3 illustrates a relationship between the time after adding Ca until casting and iron loss W_{10/400}. From FIG. 3, it can be seen that when the time until casting is less than 150 s after adding Ca, iron loss increases. The inventors proposed that when the time until casting is short, CaS in the molten steel cannot sufficiently coarsen, leading to an increase in iron loss.

From the results of Experiments 1 to 3, it was found that in both the process of transferring slabs using a thin slab caster while maintaining high temperatures without passing through a heating furnace and the process of holding in a tunnel furnace before hot rolling, by ensuring that the amount of added Ca is 0.0010 % or more, that the time from Ca addition to casting the molten steel is 150 s or longer, and that the entry temperature for hot rolling is 950 °C or higher, iron loss increase can be suppressed.

The present disclosure is based on the discoveries described above, and primary features of the present disclosure are as described below.
[1] A method of producing a hot-rolled steel sheet for a non-oriented electrical steel sheet, the method comprising:
   a process of continuously casting a slab having a thickness of 30 mm or more and 180 mm or less from molten steel having a chemical composition containing (consisting of), in mass%,
   C: 0.010 % or less,
   Si: 2.50 % or more and 5.00 % or less,
   Mn: 0.10 % or more and 3.00 % or less,
   P: 0.100 % or less,
   S: 0.0050 % or less,
   Al: 2.00 % or less,
   N: 0.0080 % or less,
   Cu: 1.00 % or less,
   Ni: 0.50 % or less,
   Cr: 3.00 % or less,
   Mo: 0.050 % or less,
   Zn: 0.010 % or less,
   Ti: 0.010 % or less,
   Sn: 0.20 % or less,
   Sb: 0.20 % or less, and
   Ca: 0.0010 % or more and 0.1000 % or less,
   and further, optionally contains at least one group selected from:
      group A: at least one selected from Mg: 0.0001 % or more and 0.10 % or less or REM: 0.0001 % or more and 0.10 % or less,
      group B: B: 0.002 % or more and 0.01 % or less,
      group C: at least one selected from V: 0.001 % or more and 0.050 % or less, Nb: 0.001 % or more and 0.005 % or less, Ta: 0.0001 % or more and 0.0020 % or less, W: 0.001 % or more and 0.050 % or less, or Pb: 0.0001 % or more and 0.0020 % or less,
      group D: Co: 0.001 % or more and 0.100 % or less,
      group E: one or two selected from Ga: 0.0005 % or more and 0.0300 % or less and Ge: 0.0005 % or more and 0.0300 % or less, and
      group F: As: 0.001 % or more and 0.020 % or less,
   with the balance being Fe and inevitable impurity; and a process of hot rolling the slab,
   wherein, after adding Ca to the molten steel, a time until casting is 150 s or longer,
   wherein, from obtaining the slab until the slab is transferred to an entry side of a hot rolling mill, a surface temperature of the slab is maintained at 850 °C or higher, and the surface temperature of the slab at the entry side of the hot rolling mill is 950 °C or higher,
   and wherein the hot rolling includes two or more passes, carried out under conditions that the strain rate in the first pass is 5.0/s or less, and the steel sheet is heated to 950 °C or higher by a bar heater between the first and second passes.
[2] The method of producing a hot-rolled steel sheet for a non-oriented electrical steel sheet according to [1], wherein, after obtaining the slab, the slab is transferred to the entry side of the hot rolling mill without heating.
[3] The method of producing a hot-rolled steel sheet for a non-oriented electrical steel sheet according to [1], further comprising a process of holding in a tunnel furnace after obtaining the slab, wherein the surface temperature of the slab at the entry side of the tunnel furnace is 850 °C or higher, and the surface temperature of the slab at the exit side of the tunnel furnace is 950 °C or higher and 1250 °C or lower.
[4] The method of producing a hot-rolled steel sheet for a non-oriented electrical steel sheet according to any one of [1] to [3], wherein the slab is a slab cast from an electric furnace or converter.
[5] A method of producing a non-oriented electrical steel sheet, the method comprising: a hot-rolled steel sheet production process of producing a hot-rolled steel sheet by the method of producing a hot-rolled steel sheet for a non-oriented electrical steel sheet according to any one of [1] to [4]; a hot-rolled sheet annealing process of subjecting the hot-rolled steel sheet to hot-rolled sheet annealing; a cold rolling process of subjecting the annealed hot-rolled steel sheet to cold rolling to obtain a cold-rolled steel sheet; and a final annealing process of subjecting the cold-rolled steel sheet to final annealing.

### (Advantageous Effect)

By using the method of producing a hot-rolled steel sheet for a non-oriented electrical steel sheet of the present disclosure, it is possible to produce a non-oriented electrical steel sheet having good magnetic properties by suppressing fine precipitation of precipitates and preventing an increase in iron loss during the hot rolling process while maintaining a thin slab at a high temperature.

### BRIEF DESCRIPTION OF THE DRAWINGS

In the accompanying drawings:
FIG. 1 is a diagram illustrating a relationship between an amount of Ca added to molten steel and iron loss W_{10/400};
FIG. 2 is a diagram illustrating a relationship between an entry temperature of hot rolling and iron loss W_{10/400}; and
FIG. 3 is a diagram illustrating a relationship between time until casting after Ca addition and iron loss W_{10/400}.

### DETAILED DESCRIPTION

The present disclosure is described in detail below.

### [Chemical composition]

The reasons for limiting the chemical composition of the molten steel in the present disclosure are described. Hereinafter, unless otherwise specified, "%" refers to mass percent. The chemical composition of the molten steel is that immediately after the addition of Ca.

### C: 0.010 % or less

C is a harmful element that causes magnetic aging in the product sheet, forming carbides and worsening iron loss. Therefore, in the present disclosure, C content is set to 0.005 % or less to suppress the magnetic aging. A lower limit is not particularly restricted and may be 0 %, but from the perspective of controlling decarburization costs, the lower limit is preferably about 0.0001 %.

### Si: 2.50 % or more and 5.00 % or less

Si increases the electrical resistance of the steel sheet, and an addition of 2.50 % or more is necessary to sufficiently decrease iron loss. Therefore, according to the present disclosure, Si content is set to 2.50 % or more. On the other hand, exceeding 5.00 % makes rolling difficult. The Si content is therefore 5.00 % or less. From the perspective of manufacturability, 4.00 % or less is preferable.

### Mn: 0.10 % or more and 3.00 % or less

Mn, like Si and Al, increases the electrical resistance of the steel sheet and has the effect of decreasing iron loss. Therefore, according to the present disclosure, Mn content is set to 0.10 % or more. On the other hand, exceeding 3.00 % results in the precipitation of Mn carbides, which worsens iron loss. The Mn content is therefore 3.00 % or less. The Mn content is preferably 0.20 % or more. The Mn content is preferably 1.00 % or less.

### P: 0.100 % or less

P has an effect of increasing the strength of the steel and can be used for strength adjustment. On the other hand, exceeding 0.10 % causes the steel to become brittle, leading to a decrease in manufacturability. P content is therefore 0.100 % or less. A lower limit is not particularly restricted and may be 0 %, but from the perspective of suppressing P removal costs, the lower limit is preferably about 0.01 %.

### S: 0.0050 % or less

S is an element that forms sulfides and increases iron loss. Therefore, when S is included, S content is set to 0.0050 % or less. The S content is preferably 0.0020 % or less. From the viewpoint of iron loss, the lower the S content, the better, and therefore a lower limit of the S content is not limited and may be 0 %. However, S is an element that inevitably mixes into steel as an impurity, and an excessive decrease in content leads to increased production costs. Therefore, from the perspective of cost, a lower limit is preferably set to about 0.0005 %.

### Al: 2.00 % or less

Al, like Si, increases the electrical resistance of the steel sheet and has an effect of decreasing iron loss. However, when exceeding 2.00 %, rolling becomes difficult. Al content is therefore 2.00 % or less. A lower limit is not particularly restricted and may be 0 %. From the perspective of decreasing iron loss, the lower limit is preferably set to around 0.1 %.

### N: 0.0080 % or less

N is a harmful element that forms fine nitrides, inhibits grain growth, and increases iron loss, and therefore decreasing N content as much as possible is desirable. In particular, when the N content exceeds 0.0080 %, the adverse effects mentioned above become significant, and therefore the N content is set to 0.0080 % or less. The content is more preferably 0.0030 % or less. A lower limit is not particularly restricted and may be 0 %. From a cost perspective, the lower limit is preferably set to around 0.0005 %.

### Cu: 1.00 % or less

Cu is an element that has an effect of increasing magnetic flux density of steel sheets. However, when Cu content exceeds 1.00 %, hot brittleness occurs, causing surface defects. Therefore, when Cu is added, the Cu content is 1.00 % or less. From the viewpoint of balancing magnetic properties and cost, the Cu content is preferably 0.10 % or less. On the other hand, a lower limit of the Cu content is not particularly restricted and may be 0 %. From the viewpoint of enhancing the effect of Cu addition, the lower limit is preferably set to around 0.01 %.

### Ni: 0.50 % or less

Ni is an element that improves the toughness of the steel. However, when Ni content exceeds 0.50 %, in addition to the effect becoming saturated, the magnetic flux density decreases due to a decrease in saturation magnetization, which in turn increases iron loss. Therefore, when adding Ni, the Ni content is set to 0.50 % or less. On the other hand, a lower limit of the Ni content is not particularly restricted and may be 0 %. From the viewpoint of enhancing the effect of Ni addition, the lower limit is preferably set to around 0.05 %.

### Cr: 3.00 % or less

Cr is an element that increases the resistivity of the steel and has the effect of decreasing iron loss. However, when Cr content exceeds 3.00 %, in addition to a decrease in saturation magnetization, an increase in magnetostriction, which is a shape change of the steel sheet due to magnetization, significantly increases iron loss. Therefore, when adding Cr, the Cr content is set to 3.00 % or less. On the other hand, a lower limit of the Cr content is not particularly restricted and may be 0 %. From the viewpoint of enhancing the effect of Cr addition, the lower limit is preferably set to around 0.05 %.

### Mo: 0.050 % or less

Mo reacts with C to form carbides at grain boundaries, which has the effect of improving strength. However, when Mo content exceeds 0.050 %, there is a tendency for iron loss to increase, so when adding Mo, the Mo content is set to 0.050 % or less. On the other hand, a lower limit of the Mo content is not particularly restricted and may be 0 %. From the perspective of strength, the lower limit is preferably set to around 0.010 %.

### Zn: 0.010 % or less

Zn reacts with S to form coarse sulfides, suppressing the precipitation of fine sulfides such as MnS, which has the effect of decreasing iron loss. However, when the Zn content exceeds 0.010 %, the amount of the above sulfides increases, which in turn inhibits grain growth and increases iron loss, so when adding Zn, the Zn content is set to 0.010 % or less. On the other hand, a lower limit of the Zn content is not particularly restricted and may be 0 %. From the perspective of decreasing iron loss, the lower limit is preferably set to around 0.001 %.

### Ti: 0.010 % or less

Ti reacts with C and N to form carbides and nitrides at the grain boundaries, thereby improving strength, similar to Mo. However, when exceeding 0.010 %, the amount of the sulfides and nitrides increases, which hinders grain growth and increases iron loss. Therefore, when adding Ti, the Ti content is set to 0.010 % or less. On the other hand, a lower limit of the Ti content is not particularly restricted and may be 0 %. From the perspective of strength, the lower limit is preferably set to around 0.002 %.

### Sn: 0.20 % or less

Sn is an element that has an effect of suppressing nitridation and oxidation of the surface layer and decreasing iron loss. However, the effect saturates when added in excess of 0.20 %, and therefore when Sn is added, Sn content is 0.20 % or less. The Sn content is preferably 0.10 % or less. On the other hand, a lower limit of the Sn content is not particularly restricted and may be 0 %. From the perspective of strength, the lower limit is preferably set to around 0.005 %.

### Sb: 0.20 % or less

Sb is an element that has an effect of suppressing nitridation and oxidation of the surface layer and decreasing iron loss. However, the effect saturates when added in excess of 0.20 %, and therefore when Sb is added, Sb content is 0.20 % or less. The Sn content is preferably 0.10 % or less. On the other hand, a lower limit of the Sb content is not particularly restricted and may be 0 %. From the perspective of strength, the lower limit is preferably set to around 0.005 %.

### Ca: 0.0010 % or more and 0.1000 % or less

According to the present disclosure, Ca content in the molten steel is set to be 0.0010 % or more and 0.1000 % or less. Ca is an element that improves grain growth by forming stable sulfides and decreasing fine sulfides, thereby decreasing iron loss. By controlling the amount of Ca added to the molten steel, the Ca content is set to 0.0010 % or more and 0.1000 % or less, and in combination with the casting process and hot rolling process of a thin slab described later, it is possible to suppress the fine precipitation of precipitates and suppress an increase in iron loss caused by the casting of the thin slab. When the amount of Ca is less than 0.0010 %, the effects cannot be achieved. On the other hand, when exceeding 0.1000 %, precipitation as Ca oxides occurs, worsening iron loss. From the perspective of controlling the addition cost, the preferred amount of Ca to be added is 0.050 % or less.

According to the present disclosure, the molten steel may further contain at least one group selected from
group A: at least one selected from Mg: 0.0001 % or more and 0.10 % or less or REM: 0.0001 % or more and 0.10 % or less,
group B: B: 0.002 % or more and 0.01 % or less,
group C: at least one selected from V: 0.001 % or more and 0.050 % or less, Nb: 0.001 % or more and 0.005 % or less, Ta: 0.0001 % or more and 0.0020 % or less, W: 0.001 % or more and 0.050 % or less, or Pb: 0.0001 % or more and 0.0020 % or less,
group D: Co: 0.001 % or more and 0.100 % or less,
group E: one or two selected from Ga: 0.0005 % or more and 0.0300 % or less and Ge: 0.0005 % or more and 0.0300 % or less, and
group F: As: 0.001 % or more and 0.020 % or less.

Group A: at least one selected from Mg: 0.0001 % or more and 0.10 % or less or REM: 0.0001 % or more and 0.10 % or less
Mg: 0.0001 % or more and 0.10 % or less
Mg is an element that contributes to decreasing iron loss by fixing sulfur as a sulfide. To achieve such an effect, the Mg content is set to 0.0001 % or more. On the other hand, when Mg exceeds 0.10 %, the effect becomes saturated, unnecessarily increasing costs, and therefore the upper limit is set to 0.10 %. Therefore, the Mg content is preferably 0.0001 % or more. The Mg content is preferably 0.10 % or less.

### REM: 0.0001 % or more and 0.10 % or less

REM (rare earth metal elements) is a group of elements that fix S as sulfides and contribute to decreasing iron loss. To achieve such an effect, REM content is set to 0.0001 % or more. On the other hand, when the REM content exceeds 0.10 %, the effect becomes saturated, unnecessarily increasing costs, and therefore the upper limit is set to 0.10 %. Therefore, the REM content is preferably 0.0001 % or more. The REM content is preferably 0.10 % or less.

### Group B: B: 0.002 % or more and 0.01 % or less

B has the effect of forming fine carbides in the steel, thereby enhancing the strength of the steel sheet. To achieve this effect, B content is set to 0.002 % or more. On the other hand, when the B content exceeds 0.01 %, excessive carbides form, worsening iron loss, and therefore the upper limit is set to 0.01 %. Therefore, the B content is preferably 0.002 % or more. The B content is preferably 0.01 % or less.

Group C: at least one selected from V: 0.001 % or more and 0.050 % or less, Nb: 0.001 % or more and 0.005 % or less, Ta: 0.0001 % or more and 0.0020 % or less, W: 0.001 % or more and 0.050 % or less, or Pb: 0.0001 % or more and 0.0020 % or less

### V: 0.001 % or more and 0.050 % or less

V is an element that has the effect of enhancing the strength of the steel sheet and can be added as appropriate. To achieve this effect, V content is set to 0.001 % or more. However, when the V content exceeds 0.050 %, fine precipitates form in the steel sheet, increasing iron loss, and therefore the upper limit for the V content is set to 0.050 %.

Nb is an element that has the effect of enhancing the strength of the steel sheet and can be added as appropriate. To achieve this effect, Nb content is set to 0.001 % or more. However, when the Nb content exceeds 0.005 %, fine precipitates form in the steel sheet, increasing iron loss, and therefore the upper limit for the Nb content is set to 0.005 %.

### Ta: 0.0001 % or more and 0.0020 % or less

Ta is an element that has the effect of enhancing the strength of the steel sheet and can be added as appropriate. To achieve this effect, Ta content is set to 0.0001 % or more. However, when the Ta content exceeds 0.0020 %, fine precipitates form in the steel sheet, increasing iron loss, and therefore the upper limit for the Ta content is set to 0.0020 %.

### W: 0.001 % or more and 0.050 % or less

W is an element that has the effect of enhancing the strength of the steel sheet and can be added as appropriate. To achieve this effect, W content is set to 0.001 % or more. However, when the W content exceeds 0.050 %, fine precipitates form in the steel sheet, increasing iron loss, and therefore the upper limit for the W content is set to 0.050 %.

### Pb: 0.0001 % or more and 0.0020 % or less

Pb is an element that has the effect of enhancing the strength of the steel sheet and can be added as appropriate. To achieve this effect, Pb content is set to 0.0001 % or more. However, when the Pb content exceeds 0.0020 %, fine precipitates form in the steel sheet, increasing iron loss, and therefore, the upper limit for the Pb content is set to 0.0020 %.

### Group D: Co: 0.001 % or more and 0.100 % or less

Co is an element that enhances the magnetic flux density of the steel sheet and can be added as appropriate. To obtain this effect, Co content is set to 0.001 % or more. However, increasing the Co content significantly increases alloy cost, and therefore, the upper limit for the Co content is set to 0.100 %.

### Group E: one or two selected from Ga: 0.0005 % or more and 0.0300 % or less and Ge: 0.0005 % or more and 0.0300 % or less

### Ga: 0.0005 % or more and 0.0300 % or less

Ga is an element that improves the texture of the steel sheet and enhances the magnetic flux density, and can be added as appropriate. To obtain these effects, Ga content is set to 0.0005 % or more. However, adding a large amount of Ga not only saturates the effects but also increases the alloy cost, and therefore the upper limit for the Ga content is set to 0.0300 %.

### Ge: 0.0005 % or more and 0.0300 % or less

Ge is an element that improves the texture of the steel sheet and enhances the magnetic flux density, and can be added as appropriate. To obtain these effects, Ge content is set to 0.0005 % or more. However, adding a large amount of Ge not only saturates the effects but also increases the alloy cost, and therefore the upper limit for the Ge content is set to 0.0300 %.

### Group F: As: 0.001 % or more and 0.020 % or less

As is an element that enhances the strength of the steel sheet and can be added as appropriate. To obtain this effect, As content is set to 0.001 % or more. However, when the As content exceeds 0.020 %, the risk of fracture during cold rolling increases. The upper limit for the As content is therefore set to 0.020 %.

In the chemical composition of the molten steel, the balance other than the above components is Fe and inevitable impurity.

### [Production conditions for hot-rolled steel sheet for non-oriented electrical steel sheet]

The method of producing a hot-rolled steel sheet for a non-oriented electrical steel sheet according to the present disclosure includes a process of continuous casting of a thin slab from molten steel having the above chemical composition and a process of hot rolling the thin slab, adopting the following production conditions.
(1) The time from the addition of Ca to the molten steel until the casting of the thin slab is set to be 150 s or longer. Here, the time from the addition of Ca to the molten steel until the casting of the thin slab (hereinafter also referred to as "elapsed time") corresponds to the time from the point when Ca is contained in the molten steel due to the addition until the molten steel is poured. The Ca added to the molten steel may be in the form of pure Ca or a Ca alloy such as CaSi.
(2) During the time from obtaining the thin slab to transferring it to the hot rolling mill entry side, a surface temperature of the thin slab is maintained at 850 °C or higher, and the surface temperature of the thin slab at the entry side of the hot rolling mill is set to be 950 °C or higher.
(3) Hot rolling that includes two or more passes is carried out under conditions that the strain rate in the first pass is 5.0/s or less, and the steel sheet is heated to 950 °C or higher by a bar heater between the first and second passes.

The method of producing a hot-rolled steel sheet for a non-oriented electrical steel sheets according to the present disclosure includes the following two conditions.
(A) The thin slab is produced by continuous casting, and the obtained thin slab is transferred to the hot rolling mill entry side without heating (for example, without passing through a heating furnace) while being maintained at a high temperature, but the surface temperature of the thin slab at the hot rolling mill entry side is set to be 950 °C or higher.
(B) The thin slab is produced by continuous casting, and while maintaining the surface temperature of the obtained thin slab at 850 °C or higher, it is transferred to a tunnel furnace, where it is held under conditions that the surface temperature of the slab at the exit side of the tunnel furnace is 950 °C or more and 1250 °C or less, and then transferred to the hot rolling mill entry side, but the surface temperature of the thin slab at the hot rolling mill entry side is set to be 950 °C or higher.

The following describes each of the processes.

### [Continuous casting process]

The thin slab is cast by continuous casting from molten steel having the above-mentioned chemical composition. The continuous casting method is not particularly limited and can be carried out by a known method. A method of adjusting the composition of molten steel used for continuous casting is also not particularly limited and may be a known method. For example, a converter, an electric furnace, a vacuum degasser, and other devices and methods may be used to adjust the composition of the molten steel.

The chemical composition of the thin slab obtained according to the present disclosure is substantially the same as that of the molten steel.

### (Time from Ca addition to casting (elapsed time): 150 s or longer)

According to the present disclosure, when casting the adjusted molten steel, the time from the addition of Ca to the casting (elapsed time) is set to be 150 s or longer. When the elapsed time is shorter than 150 s, Ca inclusions such as CaS cannot sufficiently coarsen in the molten steel, which may increase iron loss. On the other hand, there is no particular restriction on the upper limit of the elapsed time. When the elapsed time exceeds 1200 s, the risk of Ca volatilizing and escaping from the molten steel increases, and therefore from the perspective of good slab production efficiency the elapsed time is preferably 1200 s or shorter. The elapsed time is more preferably 600 s or shorter.

### (Thickness of thin slab: 30 mm or more and 180 mm or less)

According to the present disclosure, the thin slab having a thickness of 30 mm or more and 180 mm or less is produced. When the thickness of the slab is less than 30 mm, the surface area relative to the volume of the slab increases, and the cooling rate of the slab becomes faster, and therefore the temperature of the slab cannot be maintained during the hot rolling process. The thickness of the slab is therefore set to be 30 mm or more. On the other hand, when the thickness of the slab exceeds 180 mm, the rolling load during the hot rolling process increases, which raises the risk of fracture. The thickness of the steel slab is therefore set to be 180 mm or less.

### [Transfer process]

The thin slab obtained from the casting process is transferred to the entry side of the hot rolling mill.

### (Surface temperature of thin slab: 850 °C or higher)

The thin slab obtained from the casting process is maintained at a surface temperature of 850 °C or higher until reaching the entry side of the hot rolling mill. The thin slab after the casting process is at a high temperature, typically from 1000 °C to 1400 °C. In the transfer process, the surface temperature of the thin slab is preferably maintained at 1250 °C or lower. It is desirable to not actively cool the thin slab during the transfer process.

When adopting (A) or (B) above, the transfer process can be carried out as follows.

### (In the case of (A))

In (A), the thin slab obtained from the continuous casting process is transferred to the entry side of the hot rolling mill while maintaining a high temperature, without heating (for example, without passing through a heating furnace). In this transfer process, the temperature of the thin slab after the continuous casting process decreases, but according to the present disclosure, in order to set the surface temperature of the thin slab to 950 °C or higher at the entry side of the hot rolling mill, under the conditions of (A), the thin slab is transferred to the entry side of the hot rolling mill while at 950 °C or higher. In this transfer process, it is desirable to transfer the thin slab in the shortest time possible to avoid a temperature drop. Further, in the transfer process, the thin slab may be transferred to the entry side of the hot rolling mill after being cut. However, from the viewpoint of suppressing the temperature drop of the thin slab, it is preferable to transfer the thin slab directly to the entry side of the hot rolling mill without cutting.

### (In the case of (B))

### - Temperature of thin slab at entry side of tunnel furnace: 850 °C or higher -

In (B), the thin slab obtained from the casting process is transferred to the entry side of the hot rolling mill after being transferred to the tunnel furnace used for holding treatment. In this case, it is important to carry out the transfer to the entry side of the tunnel furnace while maintaining the surface temperature of the thin slab at 850 °C or higher. When the surface temperature of the thin slab becomes lower than 850 °C, the energy required to reheat the thin slab increases, and an energy saving effect is not achieved. In the transfer process, the thin slab may be transferred to the furnace after being cut. However, from the viewpoint of suppressing the temperature drop of the thin slab, it is preferable to transfer the thin slab directly to the tunnel furnace without cutting.

### - Holding process: temperature of thin slab at exit side of tunnel furnace: 950 °C or higher and 1250 °C or lower -

The thin slab transferred to the tunnel furnace is held under a condition that the surface temperature of the thin slab is 950 °C or higher and 1250 °C or lower at the exit side of the tunnel furnace. By carrying out holding treatment, a temperature drop of the thin slab is prevented, and the load during hot rolling is decreased.

When the temperature of the thin slab at the exit side of the tunnel furnace is lower than 950 °C, the temperature during hot rolling becomes low, leading to the precipitation of fine precipitates and an increase in iron loss. The temperature at the exit side of the tunnel furnace is therefore set to 950 °C or higher. The temperature is preferably 1100 °C or higher. On the other hand, to effectively suppress the dissolution of precipitates in the steel and the subsequent fine precipitation that increases iron loss, the temperature at the exit side of the tunnel furnace is set to 1250 °C or lower. The temperature is preferably 1200 °C or lower.

### - Holding process: holding time -

The holding time (the time required for the thin slab to pass through the tunnel furnace) is not particularly limited, but when shorter than 5 min, the temperature of the thin slab does not reach the furnace temperature, and the effect of preventing the temperature drop of the thin slab and decreasing the hot rolling load is not sufficiently demonstrated. The holding time is therefore preferably set to be 5 min or longer. On the other hand, there is no particular restriction on the upper limit of the holding time, but when exceeding 30 min, the effect becomes saturated, and the increased length of the tunnel furnace leads to increased apparatus costs. The holding time is therefore preferably set to be 30 min or shorter. The holding time is more preferably set to be 15 min or shorter.

The heating method in the holding treatment is not particularly limited, and any method may be used, such as using induction heating, a gas furnace, an electric furnace, and the like. However, from the perspective of decreasing CO₂, a heating method that utilizes electric energy is preferably used, such as induction heating or an electric furnace.

### [Hot rolling process]

The thin slab is transferred to the hot rolling mill, where hot rolling is carried out to produce a hot-rolled steel sheet.

### (Surface temperature of thin slab at entry side of hot rolling mill: 950 °C or higher)

When the surface temperature of the thin slab at the entry side of the hot rolling mill (entry temperature for hot rolling) is lower than 950 °C, the recovery of dislocations is delayed, and fine precipitates such as TiC and TiN precipitate on dislocations. The entry temperature for the hot rolling is therefore set to 950 °C or higher. On the other hand, the upper limit of the temperature can be set to 1250 °C or lower. The upper limit is preferably 1200 °C or lower. The higher the temperature within this range, the better.

The number of passes in the hot rolling is not particularly limited and can be any number that is two or more. For example, the number can be ten or less, and the number may be six or less.

### (Strain rate in first pass of hot rolling: 5.0/s or less)

When the strain rate in the first pass of the hot rolling exceeds 5.0/s, the rate at which dislocations that drive precipitation are introduced exceeds the rate at which the dislocations recover, leading to the precipitation of fine precipitates such as nitrides during the hot rolling. The strain rate in the first pass of the hot rolling is therefore set to be 5.0/s or less. On the other hand, there are no particular restrictions on the lower limit of strain rate, but productivity decreases when the strain rate is less than 1.0/s, and therefore the strain rate is preferably 1.0/s or more.

Here, the strain rate ε' is to be calculated from the following expressions (1) and (2). [Math. 1] $\begin{matrix}ε ′ = \frac{ln \left(\frac{{h}_{1}}{{h}_{0}}\right)}{{t}_{c}} & \left(1\right) \\ {t}_{c} = \frac{\left({h}_{1}+2{h}_{0}\sqrt{R \left({h}_{1}-{h}_{0}\right)}\right)}{3 {v}_{0} {h}_{0}} & \left(2\right)\end{matrix}$ Here,
ε' is the strain rate during the first pass of hot rolling,
h₁ is the slab thickness before hot rolling,
h₀ is the slab thickness after the first pass of hot rolling,
t_{c} is the time required for rolling in the first pass of hot rolling,
R is the roll diameter in the first pass of hot rolling, and
v₀ is the sheet passing speed of the steel slab.

### (Heating of steel sheet by bar heater between first pass and second pass of hot rolling: 950 °C or higher)

During the hot rolling, the steel sheet is heated to 950 °C or higher by a bar heater between the first pass and the second pass. When the steel sheet is not heated by a bar heater, the second pass of rolling is carried out in a state where dislocations are introduced, resulting in the precipitation of fine precipitates that adversely affect magnetism during the second pass of rolling. Further, when the heating of the steel sheet is less than 950 °C, the recovery of dislocations is insufficient, and therefore the heating of the steel sheet is set to be 950 °C or higher. There is no particular restriction on an upper limit, but from the viewpoint of productivity, the upper limit is preferably 1050 °C or lower. Heating between passes other than between the first pass and the second pass is not particularly limited, and heating may be carried out only between the first pass and the second pass, with no heating required between other passes. When heating is also carried out between passes other than between the first pass and the second pass, the heating temperature can be set to 950 °C or more and 1050 °C or less. Further, heating can be carried out by a bar heater.

Any heater that can carry out the above heating can be used as a bar heater. The bar heater may heat the entire transverse direction of the steel material (or rough bar), or may heat only edge portions in the transverse direction (edge heater). However, from the perspective of uniformizing the temperature distribution in the sheet transverse direction, it is preferable to use a heater that can heat the entire transverse direction of the steel material. As a heater that can heat the entire transverse direction of the steel material, it is preferable to use a solenoid-type induction heating apparatus in which a heating coil is wound in a cylindrical shape, allowing the steel material to be inductively heated while passing through. When using a solenoid-type induction heating apparatus, both the surface layer of the steel sheet and the transverse direction end portions are heated.

### (Conditions of hot rolling mill exit side)

The temperature of the steel sheet at the hot rolling mill exit side is not particularly limited, but a temperature of 800 °C or higher is preferable. The steel sheet can be coiled at the exit side of the hot rolling mill.

The thickness of the steel sheet at the exit side of the hot rolling is not particularly limited and may be any thickness. However, when the exit side sheet thickness is less than 0.4 mm, the overall length of the steel sheet becomes excessively long, decreasing productivity. Therefore, from the viewpoint of productivity, the exit side sheet thickness of the hot rolling is preferably 0.4 mm or more. On the other hand, when the exit side sheet thickness exceeds 2.0 mm, the cold rolling load increases. Therefore, from the viewpoint of decreasing the cold rolling load, the exit side sheet thickness of the hot rolling is preferably 2.0 mm or less.

### (Production conditions of non-oriented electrical steel sheet)

The method of producing a non-oriented electrical steel sheet according to an embodiment of the present disclosure includes: a hot-rolled steel sheet production process of producing a hot-rolled steel sheet by the method of production described above; a hot-rolled sheet annealing process of subjecting the hot-rolled steel sheet to hot-rolled sheet annealing; a cold rolling process of subjecting the hot-rolled steel sheet to cold rolling to obtain a cold-rolled steel sheet; and a final annealing process of subjecting the cold-rolled steel sheet to final annealing.

The processes of hot-rolled sheet annealing, cold rolling, and final annealing mentioned above are not particularly limited and can be carried out using known methods.

Pickling is also preferably carried out prior to the cold rolling, after the hot-rolled sheet annealing. Further, forming an insulating coating on the surface of the non-oriented electrical steel sheet after the final annealing is preferable. The methods for pickling and insulating coating are also not particularly limited and can be carried out using known methods.

### EXAMPLES

The present disclosure is specifically described through examples, but it is not limited to the descriptions below.

### (Example 1)

Slabs each having a thickness of 60 mm and the chemical compositions listed in Table 1 were produced by continuous casting. In the continuous casting, the time from the addition of Ca to the casting of molten steel was set to 300 s.

Each slab was then transferred to the hot rolling mill entry side without heating and subjected to five passes of hot rolling to obtain a hot-rolled steel sheet. In the hot rolling process, the surface temperature of the slab at the hot rolling mill entry side was set to 1000 °C, and the strain rate for the first pass of the hot rolling was set to 3.0/s. The steel sheet was heated to the bar heater heating temperature listed in Table 2 only between the first pass and the second pass using a bar heater.

The obtained hot-rolled steel sheet was subjected to hot-rolled sheet annealing at 1000 °C for 30 s to obtain a hot-rolled and annealed sheet. Cold rolling was then carried out on the hot-rolled and annealed sheet to obtain a cold-rolled steel sheet having a thickness of 0.20 mm. The cold-rolled steel sheet was then subjected to final annealing at 1000 °C for 10 s to obtain a non-oriented electrical steel sheet.

From the rolling direction and sheet transverse direction of the obtained non-oriented electrical steel sheet, an Epstein sample of width: 30 mm × length: 280 mm was cut out, and the iron loss W_{10/400} was measured using an Epstein tester. For a thickness of 0.25 mm, it is acceptable when the iron loss W_{10/400} is 12.5 W/kg or less.

### [Table 1]

**Table 1**

| No. | Chemical composition (mass%)* | | | | | | | | | | | | | | | Iron loss | Remarks |
|---|---|---|---|---|---|---|---|---|---|---|---|---|---|---|---|---|---|
| | C | Si | Mn | P | S | Al | N | Cu | Ni | Cr | Mo | Zn | Ti | Ca | Other | W_{10/400} (W/kg) | |
| 1 | 0.002 | 3.09 | 0.50 | 0.010 | 0.0033 | 0.50 | 0.0029 | 0.01 | 0.05 | 0.01 | 0.010 | 0.00 1 | 0.002 | 0.0022 | - | 12.23 | Example |
| 2 | 0.010 | 3.03 | 0.51 | 0.011 | 0.0027 | 0.50 | 0.0025 | 0.01 | 0.04 | 0.04 | 0.010 | 0.00 1 | 0.002 | 0.0029 | - | 12.42 | Example |
| 3 | 0.010 | 3.09 | 0.51 | 0.009 | 0.0028 | 0.51 | 0.0032 | 0.01 | 0.01 | 0.05 | 0.010 | 0.00 1 | 0.003 | 0.0027 | - | 12.55 | Comparative Example |
| 4 | 0.002 | 2.42 | 0.50 | 0.009 | 0.0025 | 0.49 | 0.0031 | 0.01 | 0.05 | 0.02 | 0.011 | 0.001 | 0.002 | 0.0030 | - | 12.55 | Comparative Example |
| 5 | 0.002 | 2.51 | 0.50 | 0.010 | 0.0025 | 0.50 | 0.0033 | 0.01 | 0.01 | 0.01 | 0.009 | 0.001 | 0.002 | 0.0024 | - | 12.45 | Example |
| 6 | 0.002 | 4.97 | 0.51 | 0.011 | 0.0027 | 0.50 | 0.0029 | 0.01 | 0.01 | 0.01 | 0.011 | 0.001 | 0.003 | 0.0028 | - | 12.12 | Example |
| 7 | 0.002 | 5.04 | 0.51 | 0.010 | 0.003 | 0.49 | 0.0031 | 0.01 | 0.04 | 0.01 | 0.009 | 0.001 | 0.003 | 0.0021 | - | - | Comparative Example |
| 8 | 0.002 | 3.08 | 0.09 | 0.011 | 0.0025 | 0.50 | 0.0028 | 0.01 | 0.01 | 0.02 | 0.010 | 0.001 | 0.002 | 0.0026 | - | 12.64 | Comparative Example |
| 9 | 0.002 | 3.00 | 0.10 | 0.009 | 0.0025 | 0.50 | 0.0031 | 0.01 | 0.01 | 0.02 | 0.010 | 0.001 | 0.003 | 0.0026 | - | 12.42 | Example |
| 10 | 0.002 | 3.10 | 2.96 | 0.010 | 0.0029 | 0.50 | 0.0035 | 0.01 | 0.03 | 0.05 | 0.010 | 0.001 | 0.002 | 0.0027 | - | 12.46 | Example |
| 11 | 0.002 | 2.95 | 3.06 | 0.009 | 0.0034 | 0.51 | 0.0027 | 0.01 | 0.05 | 0.05 | 0.009 | 0.001 | 0.003 | 0.0023 | - | 12.56 | Comparative Example |
| 12 | 0.002 | 2.99 | 0.49 | 0.095 | 0.0034 | 0.50 | 0.0033 | 0.01 | 0.02 | 0.04 | 0.009 | 0.001 | 0.002 | 0.0025 | - | 12.35 | Example |
| 13 | 0.002 | 3.01 | 0.50 | 0.106 | 0.0025 | 0.50 | 0.0027 | 0.01 | 0.02 | 0.01 | 0.009 | 0.001 | 0.002 | 0.0024 | - | - | Comparative Example |
| 14 | 0.002 | 2.98 | 0.51 | 0.011 | 0.0009 | 0.50 | 0.0029 | 0.01 | 0.03 | 0.05 | 0.009 | 0.001 | 0.002 | 0.0026 | - | 12.74 | Comparative Example |
| 15 | 0.002 | 3.08 | 0.51 | 0.010 | 0.0011 | 0.49 | 0.0034 | 0.01 | 0.01 | 0.03 | 0.010 | 0.001 | 0.003 | 0.0025 | - | 12.42 | Example |
| 16 | 0.002 | 3.01 | 0.49 | 0.009 | 0.0049 | 0.50 | 0.0026 | 0.01 | 0.02 | 0.04 | 0.009 | 0.001 | 0.003 | 0.0023 | - | 12.45 | Example |
| 17 | 0.002 | 3.03 | 0.50 | 0.011 | 0.0053 | 0.51 | 0.0029 | 0.01 | 0.01 | 0.04 | 0.011 | 0.001 | 0.002 | 0.0029 | - | 12.67 | Comparative Example |
| 18 | 0.002 | 3.04 | 0.49 | 0.011 | 0.0026 | 1.99 | 0.0035 | 0.01 | 0.04 | 0.05 | 0.009 | 0.001 | 0.002 | 0.0026 | - | 12.23 | Example |
| 19 | 0.002 | 3.04 | 0.50 | 0.010 | 0.0028 | 2.01 | 0.0029 | 0.01 | 0.05 | 0.01 | 0.011 | 0.001 | 0.003 | 0.0021 | - | - | Comparative Example |
| 20 | 0.002 | 3.03 | 0.50 | 0.010 | 0.0032 | 0.51 | 0.0077 | 0.01 | 0.01 | 0.01 | 0.011 | 0.001 | 0.003 | 0.0030 | - | 12.45 | Example |
| 21 | 0.002 | 2.92 | 0.51 | 0.011 | 0.0030 | 0.49 | 0.0085 | 0.01 | 0.02 | 0.05 | 0.009 | 0.001 | 0.003 | 0.0027 | - | 12.74 | Comparative Example |
| 22 | 0.002 | 2.94 | 0.51 | 0.011 | 0.0033 | 0.50 | 0.0026 | 0.98 | 0.01 | 0.02 | 0.009 | 0.001 | 0.003 | 0.0022 | - | 12.44 | Example |
| 23 | 0.002 | 3.01 | 0.51 | 0.011 | 0.0033 | 0.50 | 0.0033 | 1.05 | 0.03 | 0.01 | 0.011 | 0.001 | 0.003 | 0.0024 | - | - | Comparative Example |
| 24 | 0.002 | 3.00 | 0.51 | 0.009 | 0.0025 | 0.50 | 0.0031 | 0.01 | 0.48 | 0.03 | 0.010 | 0.001 | 0.003 | 0.0024 | - | 12.44 | Example |
| 25 | 0.002 | 3.10 | 0.51 | 0.010 | 0.0029 | 0.50 | 0.0035 | 0.01 | 0.52 | 0.03 | 0.009 | 0.001 | 0.003 | 0.0023 | - | 12.64 | Comparative Example |
| 26 | 0.002 | 3.10 | 0.51 | 0.009 | 0.0034 | 0.51 | 0.0026 | 0.01 | 0.02 | 2.96 | 0.011 | 0.001 | 0.002 | 0.0029 | - | 12.45 | Example |
| 27 | 0.002 | 3.04 | 0.50 | 0.010 | 0.0034 | 0.50 | 0.0027 | 0.01 | 0.03 | 3.05 | 0.009 | 0.001 | 0.002 | 0.0026 | - | 12.59 | Comparative Example |
| 28 | 0.002 | 2.95 | 0.51 | 0.009 | 0.0028 | 0.51 | 0.0034 | 0.01 | 0.04 | 0.03 | 0.048 | 0.001 | 0.002 | 0.0025 | - | 12.34 | Example |
| 29 | 0.002 | 3.09 | 0.51 | 0.011 | 0.0030 | 0.50 | 0.0031 | 0.01 | 0.03 | 0.05 | 0.053 | 0.001 | 0.003 | 0.0030 | - | 12.61 | Comparative Example |
| 30 | 0.002 | 2.98 | 0.50 | 0.010 | 0.0035 | 0.50 | 0.0029 | 0.01 | 0.02 | 0.03 | 0.010 | 0.010 | 0.002 | 0.0025 | - | 12.49 | Example |
| 31 | 0.002 | 3.10 | 0.49 | 0.011 | 0.0028 | 0.51 | 0.0031 | 0.01 | 0.03 | 0.04 | 0.011 | 0.013 | 0.002 | 0.0024 | - | 12.56 | Comparative Example |
| 32 | 0.002 | 3.09 | 0.51 | 0.009 | 0.0029 | 0.49 | 0.0025 | 0.01 | 0.05 | 0.04 | 0.009 | 0.001 | 0.009 | 0.0020 | - | 12.48 | Example |
| 33 | 0.002 | 3.00 | 0.50 | 0.011 | 0.0026 | 0.50 | 0.0032 | 0.01 | 0.03 | 0.04 | 0.011 | 0.001 | 0.012 | 0.0020 | - | 12.59 | Comparative Example |
| 34 | 0.002 | 3.10 | 0.51 | 0.009 | 0.0034 | 0.51 | 0.0026 | 0.01 | 0.04 | 0.02 | 0.009 | 0.001 | 0.002 | 0.0008 | - | 12.75 | Comparative Example |
| 35 | 0.002 | 3.04 | 0.50 | 0.010 | 0.0034 | 0.50 | 0.0027 | 0.01 | 0.04 | 0.05 | 0.010 | 0.001 | 0.003 | 0.0012 | - | 12.49 | Example |
| 36 | 0.002 | 3.10 | 0.51 | 0.010 | 0.0031 | 0.50 | 0.0032 | 0.01 | 0.04 | 0.04 | 0.010 | 0.001 | 0.003 | 0.0950 | - | 12.36 | Example |
| 37 | 0.002 | 3.06 | 0.50 | 0.010 | 0.0035 | 0.50 | 0.0031 | 0.01 | 0.04 | 0.01 | 0.009 | 0.001 | 0.003 | 0.1050 | - | 12.53 | Comparative Example |
| 38 | 0.002 | 2.96 | 0.49 | 0.011 | 0.0030 | 0.50 | 0.0029 | 0.01 | 0.03 | 0.02 | 0.011 | 0.001 | 0.003 | 0.0026 | Sn:0.19 | 12.35 | Example |
| 39 | 0.002 | 2.95 | 0.49 | 0.010 | 0.0026 | 0.51 | 0.0028 | 0.01 | 0.02 | 0.02 | 0.010 | 0.001 | 0.002 | 0.0024 | Sn:0.20 | 12.46 | Example |
| 40 | 0.002 | 3.10 | 0.50 | 0.011 | 0.0025 | 0.50 | 0.0030 | 0.01 | 0.02 | 0.03 | 0.010 | 0.001 | 0.003 | 0.0029 | Sb:0.19 | 12.31 | Example |
| 41 | 0.002 | 2.90 | 0.51 | 0.009 | 0.0030 | 0.50 | 0.0031 | 0.01 | 0.04 | 0.03 | 0.011 | 0.001 | 0.003 | 0.0030 | Sb:0.20 | 12.45 | Example |
| 42 | 0.002 | 2.92 | 0.51 | 0.011 | 0.0030 | 0.51 | 0.0029 | 0.01 | 0.01 | 0.04 | 0.011 | 0.001 | 0.002 | 0.0029 | Mg:0.001, REM:0.001, B:0.005, V:0.01, Nb:0.001, Ta:0.001, W:0.01, Pb:0.001, Co:0.01, Ga:0.001, | 12.41 | Example |

| | | | | | | | | | | | | | | | | | |
|---|---|---|---|---|---|---|---|---|---|---|---|---|---|---|---|---|---|
| * The balance is Fe and inevitable impurity. In the table, underlining indicates a value outside of the disclosed range. | | | | | | | | | | | | | | | | | |

From the results indicated in Table 1, it can be seen that by using molten steel having a chemical composition that meets the conditions of the present disclosure, non-oriented electrical steel sheets having good iron loss are obtainable. In Table 1, No. 7, 13, 19, and 23 are examples that could not be evaluated due to fracture during cold rolling.

### (Example 2)

Steel having a chemical composition, in mass%, of C: 0.002 %, Si: 3.00 %, Mn: 0.50 %, P: 0.01 %, S: 0.0030 %, Al: 0.50 %, N: 0.0020 %, Cu: 0.01 %, Mo: 0.010 %, Zn: 0.001 %, Ti: 0.002 %, and Ca: 0.002 %, with the balance being Fe and inevitable impurity, was melted, and hot-rolled steel sheets for non-oriented electrical steel sheets were produced under the conditions listed in Table 2.

Each obtained hot-rolled steel sheet was subjected to hot-rolled sheet annealing at 1000 °C for 30 s to obtain a hot-rolled and annealed sheet.

Cold rolling was then carried out on the hot-rolled and annealed sheet to obtain a cold-rolled steel sheet having a thickness of 0.30 mm. The cold-rolled steel sheet was then subjected to final annealing at 1000 °C for 10 s to obtain a non-oriented electrical steel sheet.

From the rolling direction and sheet transverse direction of the obtained non-oriented electrical steel sheet, an Epstein sample of width: 30 mm × length: 280 mm was cut out, and the iron loss W_{10/400} was measured using an Epstein tester. For a thickness of 0.25 mm, it is acceptable when the iron loss W_{10/400} is 12.5 W/kg or less.

### [Table 2]

**Table 2**

| No. | Time until pouring after Ca addition (s) | Slab thickness (mm) | Transfer process | Entry temperature of tunnel furnace (°C) | Exit temperature of tunnel furnace (°C) | Entry temperature of hot rolling (°C) | Strain rate (/s) | Heating temperature of bar heater (°C) | W_{10/400} (W/kg) | Remarks |
|---|---|---|---|---|---|---|---|---|---|---|
| 43 | 300 | 60 | direct | - | - | 972 | 2.8 | 963 | 12.28 | Example |
| 44 | 170 | 60 | direct | - | - | 972 | 2.7 | 982 | 12.48 | Example |
| 45 | 180 | 60 | direct | - | - | 970 | 3.5 | 996 | 12.45 | Example |
| 46 | 300 | 25 | direct | - | - | 976 | 3.3 | 1007 | 12.55 | Comparative Example |
| 47 | 300 | 30 | direct | - | - | 982 | 3.0 | 980 | 12.45 | Example |
| 48 | 300 | 170 | direct | - | - | 974 | 3.4 | 988 | 12.43 | Example |
| 49 | 300 | 60 | direct | - | - | 940 | 3.3 | 985 | 12.66 | Comparative Example |
| 50 | 300 | 60 | direct | - | - | 950 | 3.5 | 969 | 12.45 | Example |
| 51 | 300 | 60 | direct | - | - | 978 | 5.1 | 999 | 12.54 | Comparative Example |
| 52 | 300 | 60 | direct | - | - | 971 | 4.9 | 963 | 12.45 | Example |
| 53 | 300 | 60 | direct | - | - | 964 | 3.2 | 950 | 12.42 | Example |
| 54 | 300 | 60 | direct | - | - | 970 | 3.3 | 945 | 12.63 | Comparative Example |
| 55 | 300 | 60 | with holding | 918 | 1091 | 973 | 3.1 | 975 | 12.38 | Example |
| 56 | 170 | 60 | with holding | 900 | 1098 | 987 | 2.8 | 962 | 12.48 | Example |
| 57 | 180 | 60 | with holding | 916 | 1103 | 980 | 2.5 | 983 | 12.46 | Example |
| 58 | 300 | 25 | with holding | 901 | 1104 | 985 | 3.3 | 993 | 12.61 | Comparative Example |
| 59 | 300 | 30 | with holding | 901 | 1108 | 985 | 3.0 | 988 | 12.45 | Example |
| 60 | 300 | 170 | with holding | 909 | 1095 | 972 | 2.8 | 990 | 12.44 | Example |
| 61 | 300 | 60 | with holding | 840 | 1114 | 981 | 2.5 | 976 | 12.70 | Comparative Example |
| 62 | 300 | 60 | with holding | 850 | 1084 | 934 | 3.3 | 971 | 12.45 | Example |
| 63 | 300 | 60 | with holding | 902 | 940 | 920 | 3.1 | 999 | 12.68 | Comparative Example |
| 64 | 300 | 60 | with holding | 899 | 960 | 950 | 3.5 | 962 | 12.43 | Example |
| 65 | 300 | 60 | with holding | 905 | 1250 | 1050 | 3.2 | 963 | 12.44 | Example |
| 66 | 300 | 60 | with holding | 901 | 1260 | 1050 | 2.5 | 1002 | 12.50 | Example |
| 67 | 300 | 60 | with holding | 918 | 1114 | 940 | 3.2 | 1001 | 12.59 | Comparative Example |
| 68 | 300 | 60 | with holding | 895 | 1119 | 950 | 2.8 | 991 | 12.48 | Example |
| 69 | 300 | 60 | with holding | 906 | 1093 | 970 | 5.2 | 985 | 12.57 | Comparative Example |
| 70 | 300 | 60 | with holding | 910 | 1099 | 980 | 4.9 | 981 | 12.41 | Example |
| 71 | 300 | 60 | with holding | 902 | 1103 | 983 | 3.3 | 950 | 12.40 | Example |
| 72 | 300 | 60 | with holding | 907 | 1105 | 991 | 3.4 | 945 | 12.55 | Comparative Example |

| | | | | | | | | | | |
|---|---|---|---|---|---|---|---|---|---|---|
| In the table, underlining indicates a value outside of the disclosed range. | | | | | | | | | | |

From the results indicated in Table 2, it can be seen that by adopting the production conditions that meet the requirements of the present disclosure, non-oriented electrical steel sheets having good iron loss are obtainable.

### INDUSTRIAL APPLICABILITY

By using the method of producing a hot-rolled steel sheet for a non-oriented electrical steel sheet of the present disclosure, it is possible to produce a non-oriented electrical steel sheet having good magnetic properties by suppressing fine precipitation of precipitates and preventing an increase in iron loss during the hot rolling process while maintaining a thin slab at a high temperature.

## Claims

1. A method of producing a hot-rolled steel sheet for a non-oriented electrical steel sheet, the method comprising:
a process of continuously casting a slab having a thickness of 30 mm or more and 180 mm or less from molten steel having a chemical composition containing, in mass%,
C: 0.010% or less,
Si: 2.50 % or more and 5.00 % or less,
Mn: 0.10 % or more and 3.00 % or less,
P: 0.100 % or less,
S: 0.0050 % or less,
Al: 2.00 % or less,
N: 0.0080 % or less,
Cu: 1.00 % or less,
Ni: 0.50 % or less,
Cr: 3.00 % or less,
Mo: 0.050 % or less,
Zn: 0.010 % or less,
Ti: 0.010% or less,
Sn: 0.20 % or less,
Sb: 0.20 % or less, and
Ca: 0.0010 % or more and 0.1000 % or less,
and further, optionally contains at least one group selected from:
group A: at least one selected from Mg: 0.0001 % or more and 0.10 % or less or REM: 0.0001 % or more and 0.10 % or less,
group B: B: 0.002 % or more and 0.01 % or less,
group C: at least one selected from V: 0.001 % or more and 0.050 % or less, Nb: 0.001 % or more and 0.005 % or less, Ta: 0.0001 % or more and 0.0020 % or less, W: 0.001 % or more and 0.050 % or less, or Pb: 0.0001 % or more and 0.0020 % or less,
group D: Co: 0.001 % or more and 0.100 % or less,
group E: one or two selected from Ga: 0.0005 % or more and 0.0300 % or less and Ge: 0.0005 % or more and 0.0300 % or less, and
group F: As: 0.001 % or more and 0.020 % or less,
with the balance being Fe and inevitable impurity; and a process of hot rolling the slab,
wherein, after adding Ca to the molten steel, a time until casting is 150 s or longer,
wherein, from obtaining the slab until the slab is transferred to an entry side of a hot rolling mill, a surface temperature of the slab is maintained at 850 °C or higher, and the surface temperature of the slab at the entry side of the hot rolling mill is 950 °C or higher,
and wherein the hot rolling includes two or more passes, carried out under conditions that the strain rate in the first pass is 5.0/s or less, and the steel sheet is heated to 950 °C or higher by a bar heater between the first and second passes.

2. The method of producing a hot-rolled steel sheet for a non-oriented electrical steel sheet according to claim 1, wherein, after obtaining the slab, the slab is transferred to the entry side of the hot rolling mill without heating.

3. The method of producing a hot-rolled steel sheet for a non-oriented electrical steel sheet according to claim 1, further comprising a process of holding in a tunnel furnace after obtaining the slab, wherein the surface temperature of the slab at the entry side of the tunnel furnace is 850 °C or higher, and the surface temperature of the slab at the exit side of the tunnel furnace is 950 °C or higher and 1250 °C or lower.

4. The method of producing a hot-rolled steel sheet for a non-oriented electrical steel sheet according to any one of claims 1 to 3, wherein the slab is a slab cast from an electric furnace or converter.

5. A method of producing a non-oriented electrical steel sheet, the method comprising: a hot-rolled steel sheet production process of producing a hot-rolled steel sheet by the method of producing a hot-rolled steel sheet for a non-oriented electrical steel sheet according to any one of claims 1 to 4; a hot-rolled sheet annealing process of subjecting the hot-rolled steel sheet to hot-rolled sheet annealing; a cold rolling process of subjecting the annealed hot-rolled steel sheet to cold rolling to obtain a cold-rolled steel sheet; and a final annealing process of subjecting the cold-rolled steel sheet to final annealing.
